# EUROPEAN PATENT APPLICATION

(11) **EP 4 714 773 A1**
(43) Date of publication of application: **25.03.2026**
(21) Application number: 24202232.5
(22) Date of filing: 24.09.2024
(51) Int. Cl.: B60W 40/112

(54) **BANK ANGLE ESTIMATION**

(71) Applicant: Volvo Truck Corporation, 405 08 Göteborg (SE)
(72) Inventor: MARZBANRAD, Alireza, GÖTEBORG (SE); KUMRU, Murat, GÖTEBORG (SE); PANAHANDEH, Ghazaleh, GÖTEBORG (SE); ARIKERE, Adithya, GÖTEBORG (SE)
(74) Representative: Ström & Gulliksson AB

(57) **Abstract**

A computer-implemented method for estimating bank angle as experienced by a wheel of a vehicle is disclosed. The method comprises acquiring acceleration measurements from a wheel mounted sensor of the wheel, and estimating the bank angle as experienced by the wheel based on a gravitational component of the acquired acceleration measurements.

The acquired acceleration measurements may indicate acceleration in one or more of: a radial dimension of the wheel, a tangential dimension of the wheel, and a lateral dimension of the wheel.

Estimating the bank angle as experienced by the wheel may comprise extracting an amplitude of the gravitational component of the acquired acceleration measurements by filtering the acquired acceleration measurements subject to an oscillation caused by rotation of the wheel, and estimating the bank angle as experienced by the wheel based on the extracted amplitude.

Corresponding computer system, vehicle, computer program product, and non-transitory computer-readable storage medium are also disclosed.

## Description

### TECHNICAL FIELD

The disclosure relates generally to vehicle management. In particular aspects, the disclosure relates to bank angle estimation. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The bank angle may be defined as the angle between a horizontal plane and a ground surface plane, the angle being defined for a cross-section of the ground which is perpendicular to a travel direction of a road, or of a vehicle. Put differently, the bank angle may be seen as an indication of ground surface slating in a lateral dimension relative to the travel direction of a road, or of a vehicle.

For many vehicle management functions, it is beneficial to have information regarding the bank angle. Examples of such vehicle management functions include vehicle motion management, motion estimation, motion prediction, rollover protection, mass estimation, etc.

However, available approaches for bank angle estimation may suffer from problems relating to accuracy, robustness, complexity, cost, etc.

Therefore, there is a need for alternative approaches for bank angle estimation. Preferably, such alternative approaches provide an improvement compared to available approaches for bank angle estimation (e.g., one or more of: increased accuracy, increased robustness, decreased complexity, decreased cost, etc.).

### SUMMARY

According to a first aspect of the disclosure, a computer system is provided for estimating bank angle as experienced by a wheel of a vehicle. The computer system comprises processing circuitry configured to acquire acceleration measurement(s) from a wheel mounted sensor of the wheel, and estimate the bank angle as experienced by the wheel based on a gravitational component of the acquired acceleration measurement(s). The first aspect of the disclosure may seek to enable improved bank angle estimation (e.g., one or more of: increased accuracy, increased robustness, decreased complexity, decreased cost, etc.). A technical benefit may include that vehicle management may be implemented with improved performance and/or lowered cost, compared to other vehicle management approaches.

Optionally in some examples, including in at least one preferred example, the acquired acceleration measurement(s) may indicate acceleration in one or more of: a radial dimension of the wheel, a tangential dimension of the wheel, and a lateral dimension of the wheel. A technical benefit may include that the bank angle estimation may be improved in terms of accuracy (e.g., by using acceleration in two or more dimensions). A technical benefit may include that the bank angle estimation may be improved in terms of robustness (e.g., by using acceleration in two or more dimensions for redundancy).

Optionally in some examples, including in at least one preferred example, the processing circuitry may be configured to estimate the bank angle as experienced by the wheel by extracting an amplitude of the gravitational component of the acquired acceleration measurement(s) by filtering the acquired acceleration measurement(s) subject to an oscillation caused by rotation of the wheel, and estimating the bank angle as experienced by the wheel based on the extracted amplitude of the gravitational component of the acquired acceleration measurement(s). A technical benefit may include that the gravitational component is conveniently separable from one or more other components of the acquired acceleration measurement(s). This is due to the oscillating nature of the gravitational component resulting from rotation of the wheel on which the sensor is mounted.

Optionally in some examples, including in at least one preferred example, the processing circuitry may be configured to estimate the bank angle as experienced by the wheel by relating the gravitational component of the acquired acceleration measurement(s) to a reference value for the gravitational component corresponding to a reference bank angle. A technical benefit may include efficient translation from gravitational component to bank angle value.

Optionally in some examples, including in at least one preferred example, the processing circuitry may be configured to estimate a respective bank angle for each of two or more wheels of the vehicle, and estimate bank angle as experienced by the vehicle by combining the respective bank angle estimations. A technical benefit may include that a bank angle value may be estimated for the vehicle as a whole based on wheel specific bank angle values.

According to a second aspect of the disclosure, a vehicle is provided, which comprises the computer system of the first aspect and one or more wheel mounted sensor(s) configured to provide acceleration measurement(s) to the processing circuitry. The second aspect of the disclosure may seek to provide a vehicle with improved bank angle estimation. A technical benefit may include that vehicle management may be implemented with improved performance and/or lowered cost, compared to other vehicle management approaches.

According to a third aspect of the disclosure, a computer-implemented method is provided for estimating bank angle as experienced by a wheel of a vehicle. The method comprises acquiring (by processing circuitry of a computer system) acceleration measurement(s) from a wheel mounted sensor of the wheel, and estimating (by the processing circuitry) the bank angle as experienced by the wheel based on a gravitational component of the acquired acceleration measurement(s). The third aspect of the disclosure may seek to provide improved bank angle estimation (e.g., one or more of: increased accuracy, increased robustness, decreased complexity, decreased cost, etc.). A technical benefit may include that vehicle management may be implemented with improved performance and/or lowered cost, compared to other vehicle management approaches.

Optionally in some examples, including in at least one preferred example, the acquired acceleration measurement(s) may indicate acceleration in one or more of: a radial dimension of the wheel, a tangential dimension of the wheel, and a lateral dimension of the wheel. A technical benefit may include that the bank angle estimation may be improved in terms of accuracy (e.g., by using acceleration in two or more dimensions). A technical benefit may include that the bank angle estimation may be improved in terms of robustness (e.g., by using acceleration in two or more dimensions for redundancy).

Optionally in some examples, including in at least one preferred example, estimating the bank angle as experienced by the wheel may comprise extracting (by the processing circuitry) an amplitude of the gravitational component of the acquired acceleration measurement(s) by filtering the acquired acceleration measurement(s) subject to an oscillation caused by rotation of the wheel, and estimating (by the processing circuitry) the bank angle as experienced by the wheel based on the extracted amplitude of the gravitational component of the acquired acceleration measurement(s). A technical benefit may include that the gravitational component is conveniently separable from one or more other components of the acquired acceleration measurement(s). This is due to the oscillating nature of the gravitational component resulting from rotation of the wheel on which the sensor is mounted.

Optionally in some examples, including in at least one preferred example, estimating the bank angle as experienced by the wheel may comprise mapping (by the processing circuitry) the gravitational component of the acquired acceleration measurement(s) to a corresponding bank angle value. A technical benefit may include efficient translation from gravitational component to bank angle value.

Optionally in some examples, including in at least one preferred example, estimating the bank angle as experienced by the wheel may comprise relating (by the processing circuitry) the gravitational component of the acquired acceleration measurement(s) to a reference value for the gravitational component corresponding to a reference bank angle. A technical benefit may include efficient translation from gravitational component to bank angle value.

Optionally in some examples, including in at least one preferred example, estimating the bank angle as experienced by the wheel may comprise performing (by the processing circuitry) interpolation or extrapolation of two or more reference values for the gravitational component with corresponding reference bank angles to determine a bank angle value corresponding to the gravitational component of the acquired acceleration measurement(s). A technical benefit may include efficient translation from gravitational component to bank angle value.

Optionally in some examples, including in at least one preferred example, a respective bank angle may be estimated (by the processing circuitry) for each of two or more wheels of the vehicle, and the method may further comprise estimating (by the processing circuitry) bank angle as experienced by the vehicle by combining the respective bank angle estimations. A technical benefit may include that a bank angle value may be estimated for the vehicle as a whole based on wheel specific bank angle values.

According to a fourth aspect of the disclosure, a computer program product is provided, which comprises program code for performing, when executed by processing circuitry, the method of the third aspect.

According to a fifth aspect of the disclosure, a non-transitory computer-readable storage medium is provided, which comprises instructions, which when executed by processing circuitry, cause the processing circuitry to perform the method of the third aspect.

The fourth and fifth aspects of the disclosure may seek to convey program code for improved bank angle estimation. A technical benefit may include that new vehicles and/or legacy vehicles may be conveniently configured, by software installation/update, to acquire acceleration measurement(s) from a wheel mounted sensor of the wheel, and estimate the bank angle as experienced by the wheel based on a gravitational component of the acquired acceleration measurement(s).

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a flowchart illustrating a method according to some examples.
**FIG. 2** is a schematic drawing illustrating a vehicle according to some examples.
**FIG. 3** is a collection of schematic drawings illustrating a wheel of a vehicle according to some examples.
**FIG. 4A** is a collection of plots illustrating acceleration measurements and components thereof according to some examples.
**FIG. 4B** is a collection of plots illustrating acceleration measurements and components thereof according to some examples.
**FIG. 4C** is a plot illustrating acceleration measurements according to some examples.
**FIG. 5** is a schematic diagram illustrating a computer system for implementing examples disclosed herein, according to some examples.
**FIG. 6** is a schematic drawing illustrating a computer program product, in the form of a non-transitory computer-readable storage medium, according to some examples.
**FIG. 7** is a schematic block diagram of a control unit according to some examples.

### DETAILED DESCRIPTION

The detailed description set forth below provides information and examples of the disclosed technology with sufficient detail to enable those skilled in the art to practice the disclosure.

As already mentioned, it may be beneficial to have information regarding the bank angle for the performance of many vehicle management functions (e.g., vehicle motion management, motion estimation, motion prediction, vehicle stability control, rollover protection, autonomous or semi-autonomous driving, advanced driver-assistance systems, lane-keeping assist, mass estimation, etc.). For example, the lateral acceleration due to bank angle may be an important parameter for vehicle stability control (e.g., roll stability, tip stability, etc.), as well as for an advanced driver-assistance system (ADAS).

Motion estimation may be important for many different vehicle control functions, since vehicle control is typically executed while assuming a current state of the vehicle (which includes estimated current motion). If the bank angle is not estimated correctly, any errors or uncertainties typically leak into the motion estimation, which may thereby be rendered incorrect and degrade the performance of subsequent vehicle control.

Alternatively or additionally, motion prediction may be important for many different vehicle control functions, since vehicle control is typically executed while considering one or more possible future state(s) of the vehicle (which includes predicted future motion). For example, motion prediction may be used to anticipate potential risks of the upcoming vehicle motion, and to perform mitigation actions accordingly. If the bank angle is not estimated correctly, any errors or uncertainties typically leak into the motion prediction, which may thereby be rendered incorrect and degrade the performance of subsequent vehicle control.

Furthermore, bank angle information may be used to adjust suspension settings and/or provide information to the driver (e.g., warnings) to enable counteraction of lateral forces for a smooth and comfortable experience for driver and passengers.

It may also be beneficial that the bank angle can be robustly and accurately estimated, without any substantial increase in complexity and cost.

Accelerometers are sensors commonly used for motion estimation of vehicles. The measurements acquired by an accelerometer indicate (without distinction) the collective effect of all experienced acceleration components, including a gravitational component.

The projection of the gravitational acceleration on the observation axis of the accelerometer typically changes dynamically due to various factors (e.g., vehicle motion and road geometry, i.e., road slope and bank angle). If the result of one or more of these factors may be isolated in the acceleration measurements, the performance of vehicle management functions may improve.

To enable accurate and robust bank angle estimation at low complexity and cost, it is suggested to use wheel mounted sensor(s) to estimate the bank angle as experienced by a wheel. For example, a wheel mounted sensor may be mounted in/on a tire of the wheel or in/on a rim of the wheel.

For a wheel mounted sensor, it has been realized that the bank angle alters the characteristics of the acceleration observations in a specific way due to the varying relative orientation of the gravity vector with regard to the sensor coordinate frame. The proposed approach suggests detection of this pattern and determination of the corresponding bank angle.

A wheel mounted sensor may typically comprise an inertial measurement unit (IMU). Typically, an IMU may be a sensor collection device containing accelerometer(s), gyroscope(s), and sometimes magnetometer(s). For the purpose of the approaches suggested herein, it is the measurements from the accelerometer(s) that are relevant. Hence, it should be understood that when the term IMU is used herein, it is meant to encompass any suitable acceleration measurement device(s) (e.g., an accelerometer, or a collection of differently oriented accelerometers).

An advantage of using wheel mounted sensor(s) (instead of sensor(s), e.g., IMU(s), mounted in/on the vehicle body) is that a gravitational component of the acceleration measurements from a wheel mounted sensor does not include any (or very little) effect of road slope (ground surface slating in a longitudinal dimension relative to the travel direction of the road, or of the vehicle) or vehicle motion (e.g., vehicle roll), but depends more exclusively on road banking (ground surface slating in a lateral dimension relative to the travel direction of the road, or of the vehicle). Another advantage of using wheel mounted sensor(s) (instead of sensor(s), e.g., IMU(s), mounted in/on the vehicle body) is that the gravitational component of the acceleration measurements is identifiable/distinguishable among other components of the acceleration measurements due to its oscillating nature (which is caused by rotation of the wheel). Yet another advantage of using wheel mounted sensor(s) (instead of sensor(s), e.g., IMU(s), mounted in/on the vehicle body) is that it is possible to extract the gravitational component of the acceleration measurements from the acceleration measurements due to its oscillating nature.

Thus, an effect of using a wheel-mounted sensor is that the bank angle estimation becomes more accurate than for some other approaches. For example, it is possible to exclude any influence due to vehicle roll when a wheel-mounted sensor is used to estimate the bank angle.

For some vehicle management functions, it may be beneficial to have information of the bank angle as experienced on wheel level (for one or more, e.g., all, wheels of the vehicle). For example, comparing bank angles from individual wheels can give detailed information about the road surface itself. This may be useful in scenarios with rough ground surface conditions (e.g., off-road, construction, mining, etc.) to determine suitable control action(s) for individual wheel(s) (e.g., traction mode, enable/disable differential lock, etc.).

For some vehicle management functions, it may be beneficial to have information of the bank angle as experienced on vehicle level (or per vehicle unit). To this end, bank angle as experienced per wheel may be estimated for two or more (e.g., all) wheels of the vehicle (or vehicle unit) and the bank angle as experienced by the vehicle (or vehicle unit) may be determined as a combination (e.g., an average) of the estimated bank angles per wheel.

In some examples, the estimated bank angles per wheel may be further combined with bank angle indicating measurements from one or more sensor(s) (e.g., IMU(s) mounted in/on the vehicle body) to estimate the bank angle as experienced on vehicle level (or per vehicle unit). For example, a vehicle-centric IMU enables estimation of the vehicle roll angle relative to gravity (essentially a combined effect of the vehicle roll angle relative to the ground surface and the ground bank angle). In some examples, the vehicle roll angle relative to the ground surface may be determined by combining the ground bank angle (from the estimated bank angles per wheel) and the global vehicle roll angle relative to gravity (from a vehicle mounted IMU), which may - in turn - be used for center of gravity (CoG) height estimation. More generally, having knowledge of both ground bank angle and vehicle roll angle may be useful for vehicle control (e.g., vehicle motion management systems, stability control systems, vehicle rollover warning systems, vehicle rollover avoidance systems, etc.).

Alternatively or additionally, if the rotational speed of the wheel and the banking is observed by another sensor (e.g., using a wheel speed sensor and a gyroscope) this additional information may be combined with the result of the approaches suggested herein to further improve the estimation performance.

One approach which is suitable for combining information from multiple sensor sources in the use of Bayesian frameworks.

In the context of vehicle management, the bank angle may be defined as the angle between a horizontal plane and a ground surface plane, the angle being defined for a cross-section of the ground which is perpendicular to a travel direction of the road, or of the vehicle. Put differently, the bank angle may be seen as an indication of ground surface slating in a lateral dimension relative to the travel direction of the road, or of the vehicle.

A horizontal plane may be defined as a plane with is perpendicular to a gravity force, or perpendicular to an earth radius.

A ground surface plane may be defined as a plane intersecting the contact patches between the vehicle (or a vehicle unit) and the ground. Alternatively or additionally, a ground surface plane may be defined as a local plane intersecting the contact patch between a specific wheel of the vehicle and the ground, and having (on the average) the same three-dimensional orientation as the contact patch. Yet alternatively or additionally, a ground surface plane may be defined as a plane which is an average among local planes for two or more (e.g., all) wheels of the vehicle (or a vehicle unit).

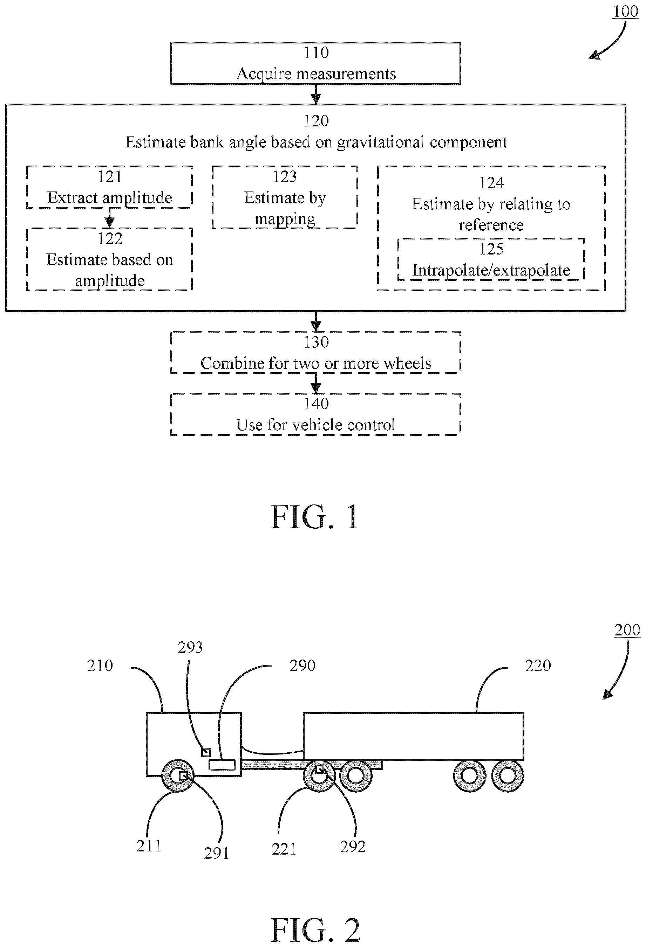

**FIG. 1** illustrates an example method **100** for estimating bank angle as experienced by a wheel of a vehicle. The method **100** is a computer-implemented method.

As illustrated by **110,** the method **100** comprises acquiring acceleration measurements from a wheel mounted sensor of the wheel under consideration. Typically, the acquired acceleration measurements indicate acceleration variation over time (e.g., in the form of a plurality acceleration values, each associated with a corresponding moment in time).

The method **100** also comprises estimating the bank angle as experienced by the wheel based on a gravitational component of the acquired acceleration measurements, as illustrated by **120.**

The bank angle may be estimated for each of one or more (e.g., all) wheels of a vehicle. The estimated wheel level bank angle(s) may be used directly for vehicle management functions. Alternatively or additionally, the estimated wheel level bank angle(s) may be combined to form an estimated vehicle (or vehicle unit) level bank angle. Thus, a respective bank angle may be estimated for each of two or more wheels of the vehicle, in **120,** and the method **100** may further comprise estimating bank angle as experienced by the vehicle (or by a vehicle unit) by combining the respective bank angle estimations, as illustrated by optional **130.**

The combination of **130** may be any suitable combination.

For example, the combination may comprise an average, or a weighted average. The applied weighting of a weighted average may be static (e.g., based on suspension properties) or dynamic (e.g., based on noise, outlier analysis, etc.). In some examples, estimate(s) stemming from relatively noisy measurements may be assigned a relatively low weight. In some examples, estimate(s) stemming from relatively noisy measurements may be assigned a zero weight. In some examples, a bank angle estimate seen to be an outlier compared to other bank angle estimate(s) may be assigned a zero (or a relatively low) weight. In some examples, one or more other factor(s) may - additionally or alternatively - be used to determine what weights to apply. Examples of such other factor(s) include lateral acceleration, longitudinal acceleration, wheel load, steer angle, etc.

Alternatively or additionally, the combination may comprise an adjustment for steered wheels which currently operate at a non-zero steering angle (e.g., removing the associated bank angles from the combination, giving the associated bank angles relatively low influence in the combination - possibly lower the larger the steering angle, compensating the associated bank angles for the steering angle before the combination, etc.).

The method **100** may further comprise using (by the processing circuitry) the estimated bank angle for vehicle control, as illustrated by optional **140.**

Generally, the estimated bank angle may be used in any suitable way (e.g., according to approaches known in the art, or according to future approaches). For example, the estimated bank angle may be used for one or more vehicle management functions as exemplified above.

Typically, the wheel mounted sensor may comprise an inertial measurement unit (IMU). For example, the wheel mounted sensor may be a single-axis IMU (i.e., an IMU measuring acceleration in only one dimension), which typically entails relatively low cost. Alternatively, the wheel mounted sensor may be a multi-axle IMU (i.e., an IMU measuring acceleration in two or three one dimensions), which typically entails redundancy and/or relatively high accuracy. Example acceleration measurements dimensions that are suitable for the approaches suggested herein include a radial dimension of the wheel (in a polar coordinate system), a tangential dimension of the wheel (in a polar coordinate system), and a lateral dimension of the wheel. Thus, the acquired acceleration measurements may indicate acceleration in one or more of: a radial dimension of the wheel, a tangential dimension of the wheel, and a lateral dimension of the wheel.

As illustrated by optional **121** and **122,** estimating the bank angle as experienced by the wheel may comprise extracting an amplitude of the gravitational component of the acquired acceleration measurements, and estimating the bank angle as experienced by the wheel based on the extracted amplitude. The amplitude of the gravitational component may be extracted in **121** by filtering the acquired acceleration measurements (indicating acceleration variation over time) subject to an oscillation caused by rotation of the wheel. For example, a filter may be used which passes frequencies associated with (e.g., including) the frequency of the rotational speed of the wheel. Alternatively or additionally, the amplitude of the gravitational component may be extracted in **121** by using an acceleration measurement taken when the sensor is within the contact patch area. Yet alternatively or additionally, the amplitude of the gravitational component may be extracted in **121** by removing the centrifugal/centripetal acceleration component from the acceleration measurement.

As illustrated by optional **123,** estimating the bank angle as experienced by the wheel may comprise mapping the gravitational component of the acquired acceleration measurements to a corresponding bank angle value. For example, the amplitude of the gravitational component as extracted in **121** may be mapped to a corresponding bank angle value (i.e., **123** may be seen as a possible implementation of **122**). The mapping may be implemented in any suitable way (e.g., look-up table, computation on the fly, etc.).

As illustrated by optional **124,** estimating the bank angle as experienced by the wheel may comprise relating the gravitational component of the acquired acceleration measurements to a reference value for the gravitational component corresponding to a reference bank angle. For example, a zero degree bank angle and a 90 degree bank angle may be suitable reference bank angles.

As illustrated by optional **125,** estimating the bank angle as experienced by the wheel may comprise performing interpolation or extrapolation of two or more reference values for the gravitational component with corresponding reference bank angles to determine a bank angle value corresponding to the gravitational component of the acquired acceleration measurements. Typically, the interpolation or extrapolation is non-linear.

For acceleration in a radial dimension of the wheel, the gravitational component will typically be according to the function *Aᵣ* cos *θ*, where *θ* represents the rotation angle of the wheel and *Aᵣ* represents an amplitude value of the gravitational component for radial acceleration. The amplitude may in turn be expressed as *Aᵣ = g* cos *ϕ*, where *ϕ* represents the bank angle, and *g* represents the gravitational constant. For a zero degree bank angle *Aᵣ* = *g,* and for a 90 degree bank angle *Aᵣ* = 0. Thus, the an oscillation amplitude *Aᵣ* extracted from the acquired measurements of radial dimension acceleration could be mapped to a corresponding bank angle value *ϕ* using the function *Aᵣ = g* cos *ϕ*, 0° ≤ *ϕ* ≤ 90°.

For acceleration in a tangential dimension of the wheel, the gravitational component will typically be according to the function *Aₜ* cos *θ*, where *Aₜ* represents an amplitude value of the gravitational component for tangential acceleration. The amplitude may in turn be expressed as *Aₜ = g* cos *ϕ*. For a zero degree bank angle *Aₜ* = *g,* and for a 90 degree bank angle *Aₜ* = 0. Thus, the an oscillation amplitude *Aₜ* extracted from the acquired measurements of tangential dimension acceleration could be mapped to a corresponding bank angle value *ϕ* using the function *Aₜ = g* cos *ϕ*, 0° ≤ *ϕ* ≤ 90°.

For acceleration in a lateral dimension of the wheel, the gravitational component will typically be a value without oscillation due to rotation of the wheel. The value may be expressed as *Aₗ* = *g* sin *ϕ*. For a zero degree bank angle *Aₗ* = 0, and for a 90 degree bank angle *Aₗ* = *g*. Thus, the an acceleration value *Aₗ* from the acquired measurements of lateral dimension acceleration could be mapped to a corresponding bank angle value *ϕ* using the function *Aₗ* = *g* sin *ϕ*, 0° ≤ *ϕ* ≤ 90°.

When there is acquired acceleration measurements for two or more dimensions, the corresponding two or more bank angle estimations may be combined to form a combined estimated bank angle. The combination may be any suitable combination. For example, the combination may comprise an average, or a weighted average.

The applied weighting of a weighted average may be static or dynamic (e.g., based on current driving conditions). In some examples, the radial dimension may be assigned a relatively high weight during braking (e.g., if the vehicle is braking hard with antilock braking interventions resulting in large wheel speed oscillations). In some examples, the tangential dimension may be assigned a relatively high weight when the ground surface is relatively rough.

**FIG. 2** schematically illustrates an example vehicle **200** for cargo transport where the techniques disclosed herein can be advantageously applied. The vehicle **200** comprises a truck/tractor/towing unit **210** configured to tow one or more trailer unit(s) **220** in a known manner. Each of the truck/tractor/towing unit **210** and the trailer unit(s) **220** may be termed a vehicle unit.

The tractor unit **210** and/or any of the trailer unit(s) **220** may comprise one or more sensor(s) **291, 292, 293** configured to provide sensor data. At least some of the sensor(s) - exemplified by **291, 292** - are mounted on respective wheel(s) **211, 221** and are configured to perform acceleration measurements and provide per wheel sensor data accordingly (compare with **110** of **FIG. 1**).

Furthermore, the tractor unit **210** and/or any of the trailer unit(s) **220** may comprise a vehicle control unit (VCU) **290** configured to perform various vehicle control functions, such as vehicle motion management (VMM). For example, the VCU **290** may comprise processing circuitry configured to perform the method **100** of **FIG. 1****.**

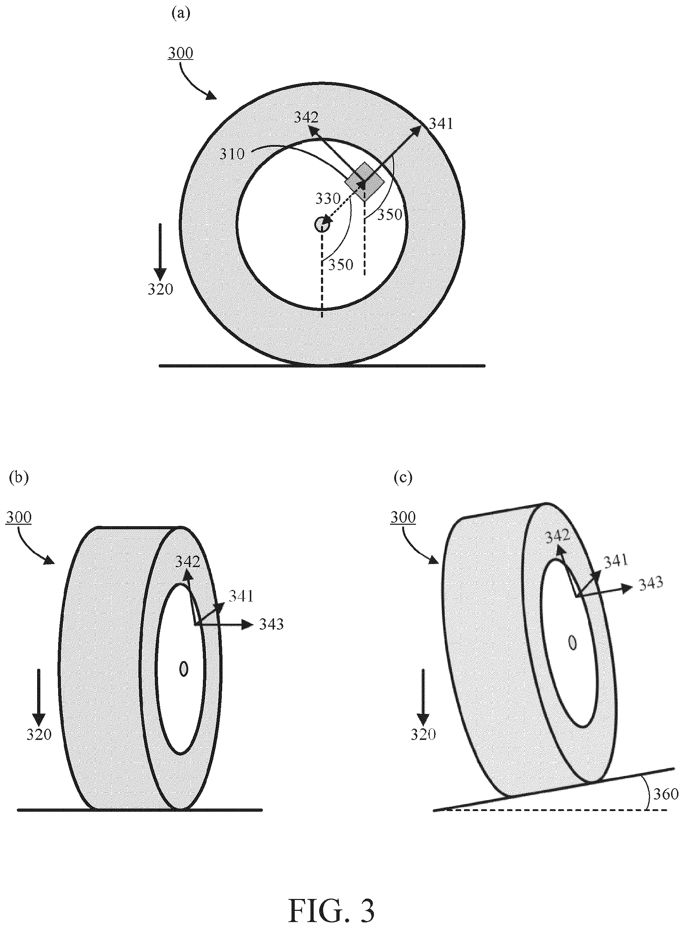

**FIG. 3** is a collection of drawings (a), (b), (c), which schematically illustrate some scenarios for an example wheel **300** in relation to the direction of gravity **320.**

The wheel **300** is shown in a side view in illustration (a). A sensor (e.g., an IMU or another suitable accelerometer) **310** is mounted in/on the wheel **300.** In the example of **FIG. 3****,** the sensor **310** is mounted at a radial distance *r* **330** from the rotational center of the wheel **300.** However, it should be noted that mounting at the rotational center of the wheel **300** is also a suitable option. The sensor **310** may be configured to perform acceleration measurements in a radial dimension **341** of the wheel and/or in a tangential dimension **342** of the wheel and/or in a lateral dimension of the wheel (not visible). The rotation angle *θ* of the wheel is shown as **350.**

The wheel **300** is shown in a perspective view with a zero degree bank angle *ϕ* in illustration (b). The sensor **310** is not show in order to not obscure the illustration, but is thought to have a similar position as in illustration (a). The sensor may be configured to perform acceleration measurements in a radial dimension **341** of the wheel and/or in a tangential dimension **342** of the wheel and/or in a lateral dimension **343** of the wheel.

The wheel **300** is shown in a perspective view with a non-zero degree bank angle *ϕ* **360** in illustration (c). The sensor **310** is not show in order to not obscure the illustration, but is thought to have a similar position as in illustrations (a) and (b). The sensor may be configured to perform acceleration measurements in a radial dimension **341** of the wheel and/or in a tangential dimension **342** of the wheel and/or in a lateral dimension **343** of the wheel.

The coordinate frame **341, 342, 342** of the acceleration measurements is anchored to the sensor. Thereby, the coordinate frame **341, 342, 342** rotates with respect to the vehicle body due to rotation of the wheel **300.** Furthermore the coordinate frame **341, 342, 342** is tilted relative the direction of gravity **320** when the bank angle is non-zero.

The total acceleration *aₜₒₜ* in the radial dimension **341** may be expressed as *aₜₒₜ = a_{c}* + *a_{g}* + *aₚ*, where *a_{c}* represents the centrifugal/centripetal acceleration, *a_{g}* represents the observed gravitational acceleration, and *aₚ* represents acceleration due to the vertical forces caused by road-tire contact. The centrifugal/centripetal acceleration (undisturbed by traversal of the contact patch) may be expressed as *a_{c}* = ω²*r*, where ω represents rotational speed of the wheel. The observed gravitational acceleration may be expressed as *a_{g}* = *g* cos *ϕ* cos *θ*.

These three components are typically dominant, and other acceleration components (e.g., due to external disturbances, translational acceleration of the vehicle, etc.) could be neglected. However, it should be noted that the approaches suggested herein are applicable even if other acceleration components are substantial, due to the uniquely oscillating nature of the gravitational component.

According to some examples of the approach suggested herein, the observed total acceleration (e.g., in the radial dimension) *aₜₒₜ* is processed to estimate the wheel level bank angle (i.e., angle of wheel relative gravity). This can be achieved by realizing that the oscillating low-frequency variation in the observations originates from the gravitational acceleration component, and that the amplitude of this component is a function of the bank angle. Thus, identifying the amplitude of the low-frequency oscillation (e.g., by means of appropriate filtering) enables estimation of the bank angle, and identifying a change over time in amplitude of the low-frequency oscillation enables estimation of bank angle variations.

Corresponding conclusions may be made for the total acceleration in the tangential dimension **342,** and its components.

For the lateral dimension **343,** the centrifugal/centripetal acceleration and acceleration due to the vertical forces caused by road-tire contact are typically less prominent than in the radial dimension and could be neglected, i.e., *aₜₒₜ* ≈ *a_{g}.* The observed gravitational acceleration may be expressed as *a_{g}* = *g* sin *ϕ*. Thus, in contrast to the acceleration of the radial and tangential dimensions, the lateral acceleration is not a function of the rotational angle of the wheel, but has a constant value for a corresponding constant bank angle. Provided that disturbances can be adequately mitigated, the lateral acceleration measurements may be mapped directly to a corresponding bank angle.

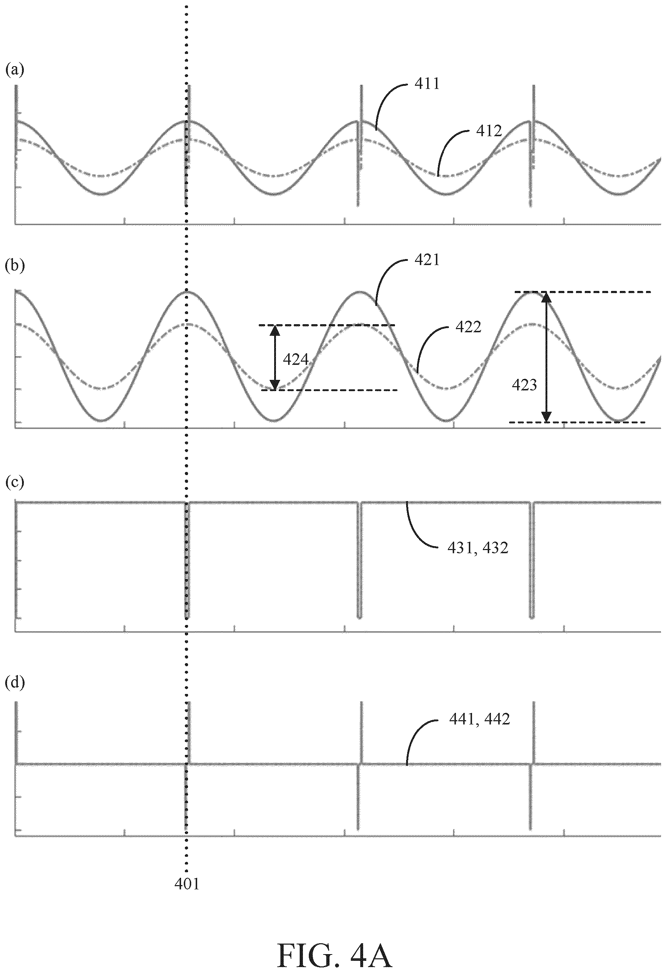

**FIG. 4A** is a collection of plots illustrating acceleration measurements and components thereof according to some examples, corresponding to use of a wheel mounted (more particularly tire mounted) radial accelerometer at zero degree bank angle and at a constant non-zero degree bank angle, with constant rotational speed for the wheel.

For all of the plots, time is shown on the horizontal axis (ranging over 6 seconds), and acceleration is shown on the vertical axis (ranging from -10 m/s² to 30 m/s² in (a), ranging from -10 m/s² to 10 m/s² in (b), ranging from -1 m/s² to 9 m/s² in (c), and ranging from -10 m/s² to 10 m/s² in (d)).

The acceleration measurements *aₜₒₜ* are shown in (a) for zero degree bank angle **411** and constant non-zero degree bank angle **412.** The gravitational component *a_{g}* is shown in (b) for zero degree bank angle **421** and constant non-zero degree bank angle **422.** The centrifugal/centripetal component *a_{c}* is shown in (c) for zero degree bank angle **431** and constant non-zero degree bank angle **432** (coinciding). The component *aₚ* resulting from tire-road contact is shown in (d) for zero degree bank angle **441** and constant non-zero degree bank angle **442** (coinciding).

It should be noted that the gravitational component **421, 422** has an oscillating (sinusoid) nature with a periodicity corresponding to the rotational speed of the wheel. It should also be noted that this is the only component of the measurements with such characteristic. Thus, it is possible to identify and extract the gravitational component **421, 422** from the acceleration measurements **411, 412.** Furthermore, since the amplitude **423, 424** of the gravitational component **421, 422** varies with the bank angle, it is possible to estimate the bank angle from the gravitational component **421, 422.**

It can also be noted that the centrifugal/centripetal component drops to zero when the sensor traverses the contact patch area, and that there are acceleration spikes of opposite signs when the sensor enters and leaves the contact patch area. These effect are specific for a tire mounted sensor and will typically not be seen for a rim mounted accelerometer.

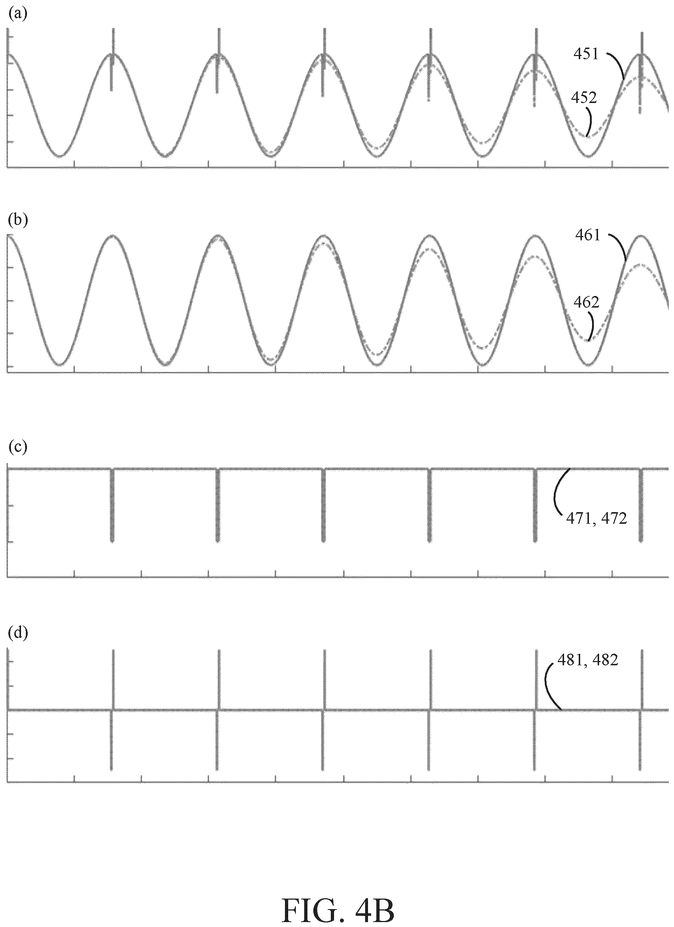

**FIG. 4B** is a collection of plots illustrating acceleration measurements and components thereof according to some examples, corresponding to use of a wheel mounted (more particularly tire mounted) radial accelerometer at zero degree bank angle and at an increasing non-zero degree bank angle, with constant rotational speed for the wheel.

For all of the plots, time is shown on the horizontal axis (ranging over 20 seconds), and acceleration is shown on the vertical axis (ranging from -10 m/s² to 17 m/s² in (a), ranging from -10 m/s² to 10 m/s² in (b), ranging from -1 m/s² to 3 m/s² in (c), and ranging from -6 m/s² to 6 m/s² in (d)).

The acceleration measurements *aₜₒₜ* are shown in (a) for zero degree bank angle **451** and increasing non-zero degree bank angle **452.** The gravitational component *a_{g}* is shown in (b) for zero degree bank angle **461** and increasing non-zero degree bank angle **462.** The centrifugal/centripetal component *a_{c}* is shown in (c) for zero degree bank angle **471** and increasing non-zero degree bank angle **472** (coinciding). The component *aₚ* resulting from tire-road contact is shown in (d) for zero degree bank angle **481** and increasing non-zero degree bank angle **482** (coinciding).

Similarly to the example of **FIG. 4A,** it is noted that the gravitational component **461, 462** is the only component with an oscillating nature, and it is therefore possible to identify and extract the gravitational component **461, 462** from the acceleration measurements **451, 452.** Furthermore, it may be noted that the amplitude of the gravitational component **462** decreases over time as the bank angle increases.

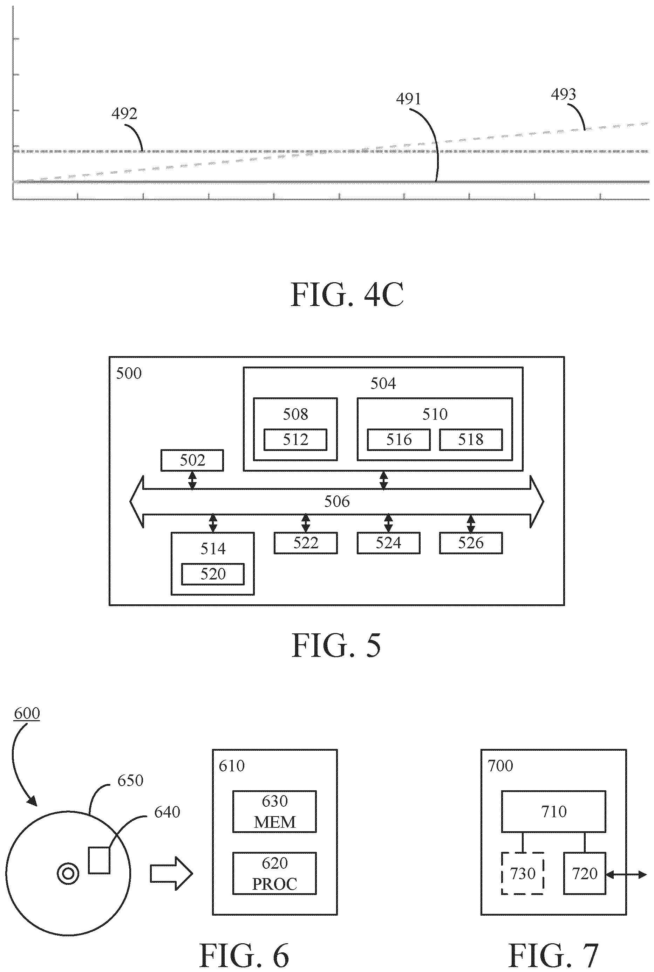

**FIG. 4C** is a plot illustrating acceleration measurements according to some examples, corresponding to use of a wheel mounted lateral accelerometer. Time is shown on the horizontal axis (ranging over 20 seconds), and acceleration is shown on the vertical axis (ranging from -1 m/s² to 10 m/s²). The acceleration measurements *aₜₒₜ* are shown in for zero degree bank angle **491,** constant non-zero bank angle **492,** and increasing non-zero degree bank angle **493.**

In contrast to the examples of **FIGs. 4A-B,** the gravitational component is not of oscillating nature, and it dominates the acceleration measurements **491, 492, 493.**

It should be note that acceleration measurements in the plural form has been used herein as an example (the plural being due to using more than one dimension - e.g., two or more of radial, tangential, and lateral - and/or due to measurement samples being collected over time), even if a single measurement may suffice in some circumstances (e.g., when using lateral acceleration to determine the gravitational component).

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device
interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit (VCU) or other suitable control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 6** illustrates a computer program product **600** exemplified as a non-transitory computer-readable medium in the form of a compact disc read-only memory (CD ROM) **650.** The computer-readable medium has stored thereon program code **640** comprising instructions. The program code is loadable into processing circuitry (PROC; e.g., a data processing unit) **620,** which may, for example, be comprised in a control unit **610.** When loaded into the processing circuitry, the program code may be stored in a memory (MEM) **630** associated with, or comprised in, the processing circuitry. According to some examples, the program code may, when loaded into, and run by, the processing circuitry, cause execution of method steps according to, for example, any of the methods described herein.

**FIG. 7** schematically illustrates, in terms of a number of functional units, the components of a control unit **700** according to some examples. This control unit **700** may be comprised in the vehicle **200;** e.g., in the form of a VCU **290.** Processing circuitry **710** is provided using any combination of one or more of a suitable central processing unit CPU, multiprocessor, microcontroller, digital signal processor DSP, etc., capable of executing software instructions stored in a computer program product, e.g. in the form of a storage medium **730.** The processing circuitry **710** may further be provided as at least one application specific integrated circuit ASIC, or field programmable gate array FPGA.

Particularly, the processing circuitry **710** is configured to cause the control unit **700** to perform a set of operations, or steps, such as any of the methods described herein.

For example, the storage medium **730** may store the set of operations, and the processing circuitry **710** may be configured to retrieve the set of operations from the storage medium **730** to cause the control unit **700** to perform the set of operations. The set of operations may be provided as a set of executable instructions. Thus, the processing circuitry **710** is thereby arranged to execute methods as herein disclosed. In particular, there is disclosed a control unit **700** for controlling a vehicle **200,** the control unit comprising processing circuitry **710,** an interface **720** coupled to the processing circuitry **710,** and a memory **730** coupled to the processing circuitry **710,** wherein the memory comprises machine readable computer program instructions that, when executed by the processing circuitry, causes the control unit to perform the methods discussed herein.

The storage medium **730** may also comprise persistent storage, which, for example, can be any single one or combination of magnetic memory, optical memory, solid state memory or even remotely mounted memory.

The control unit **700** may further comprise an interface **720** for communications with at least one external device. As such, the interface **720** may comprise one or more transmitters and receivers, comprising analogue and digital components and a suitable number of ports for wireline or wireless communication.

The processing circuitry **710** controls the general operation of the control unit **700,** e.g., by sending data and control signals to the interface **720** and the storage medium **730,** by receiving data and reports from the interface **720,** and by retrieving data and instructions from the storage medium **730.** Other components, as well as the related functionality, of the control node are omitted in order not to obscure the concepts presented herein.

### A non-exhaustive list of examples:

**Example 1:** A computer system for estimating bank angle as experienced by a wheel of a vehicle, the computer system comprising processing circuitry configured to: acquire acceleration measurement(s) from a wheel mounted sensor of the wheel; and estimate the bank angle as experienced by the wheel based on a gravitational component of the acquired acceleration measurement(s).

**Example 2:** The computer system of **Example 1,** wherein the acquired acceleration measurement(s) indicate acceleration in one or more of: a radial dimension of the wheel, a tangential dimension of the wheel, and a lateral dimension of the wheel.

**Example 3:** The computer system of any of **Examples 1-2,** wherein the processing circuitry is configured to estimate the bank angle as experienced by the wheel by: extracting an amplitude of the gravitational component of the acquired acceleration measurement(s) by filtering the acquired acceleration measurement(s) subject to an oscillation caused by rotation of the wheel; and estimating the bank angle as experienced by the wheel based on the extracted amplitude of the gravitational component of the acquired acceleration measurement(s).

**Example 4:** The computer system of any of **Examples 1-3,** wherein the processing circuitry is configured to estimate the bank angle as experienced by the wheel by: mapping the gravitational component of the acquired acceleration measurement(s) to a corresponding bank angle value.

**Example 5:** The computer system of any of **Examples 1-4,** wherein the processing circuitry is configured to estimate the bank angle as experienced by the wheel by: relating the gravitational component of the acquired acceleration measurement(s) to a reference value for the gravitational component corresponding to a reference bank angle.

**Example 6:** The computer system of **Example 5,** wherein the processing circuitry is configured to estimate the bank angle as experienced by the wheel by: performing interpolation or extrapolation of two or more reference values for the gravitational component with corresponding reference bank angles to determine a bank angle value corresponding to the gravitational component of the acquired acceleration measurement(s).

**Example 7:** The computer system of any of **Examples 1-6,** wherein the processing circuitry is configured to: estimate a respective bank angle for each of two or more wheels of the vehicle, and estimate bank angle as experienced by the vehicle by combining the respective bank angle estimations.

**Example 8:** A vehicle comprising the computer system of any of **Examples 1-7** and one or more wheel mounted sensor(s) configured to provide acceleration measurement(s) to the processing circuitry.

**Example 9:** A computer-implemented method for estimating bank angle as experienced by a wheel of a vehicle, the method comprising: acquiring (by processing circuitry of a computer system) acceleration measurement(s) from a wheel mounted sensor of the wheel; and estimating (by the processing circuitry) the bank angle as experienced by the wheel based on a gravitational component of the acquired acceleration measurement(s).

**Example 10:** The method of **Example 9,** wherein the acquired acceleration measurement(s) indicate acceleration in one or more of: a radial dimension of the wheel, a tangential dimension of the wheel, and a lateral dimension of the wheel.

**Example 11:** The method of any of **Examples 9-10,** wherein estimating the bank angle as experienced by the wheel comprises: extracting (by the processing circuitry) an amplitude of the gravitational component of the acquired acceleration measurement(s) by filtering the acquired acceleration measurement(s) subject to an oscillation caused by rotation of the wheel; and estimating (by the processing circuitry) the bank angle as experienced by the wheel based on the extracted amplitude of the gravitational component of the acquired acceleration measurement(s).

**Example 12:** The method of any of **Examples 9-11,** wherein estimating the bank angle as experienced by the wheel comprises: mapping (by the processing circuitry) the gravitational component of the acquired acceleration measurement(s) to a corresponding bank angle value.

**Example 13:** The method of any of **Examples 9-12,** wherein estimating the bank angle as experienced by the wheel comprises: relating (by the processing circuitry) the gravitational component of the acquired acceleration measurement(s) to a reference value for the gravitational component corresponding to a reference bank angle.

**Example 14:** The method of **Example 13,** wherein the reference bank angle includes one or more of a zero degree bank angle and a ninety degree bank angle.

**Example 15:** The method of any of **Examples 13-14,** wherein estimating the bank angle as experienced by the wheel comprises: performing (by the processing circuitry) interpolation or extrapolation of two or more reference values for the gravitational component with corresponding reference bank angles to determine a bank angle value corresponding to the gravitational component of the acquired acceleration measurement(s).

**Example 16:** The method of **Example 15,** wherein the interpolation or extrapolation includes fitting, to two or more reference amplitude values for the gravitational component with corresponding reference bank angles, of the function *A* = *g* cos *ϕ*, where *ϕ* represents the bank angle, *g* represents a gravitational constant, and *A* represents an amplitude value of the gravitational component.

**Example 17:** The method of any of **Examples 9-16,** wherein a respective bank angle is estimated (by the processing circuitry) for each of two or more wheels of the vehicle, and the method further comprises: estimating (by the processing circuitry) bank angle as experienced by the vehicle by combining the respective bank angle estimations.

**Example 18:** The method of any of **Examples 9-17,** further comprising using (by the processing circuitry) the estimated bank angle for vehicle control.

**Example 19:** A computer program product comprising program code for performing, when executed by processing circuitry, the method of any of **Examples 9-18.**

**Example 20:** A non-transitory computer-readable storage medium comprising instructions, which when executed by processing circuitry, cause the processing circuitry to perform the method of any of **Examples 9-18.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (500) for estimating bank angle (360) as experienced by a wheel (211, 221, 300) of a vehicle (200), the computer system comprising processing circuitry configured to:
acquire acceleration measurement(s) (411, 412, 451, 452) from a wheel mounted sensor (310) of the wheel; and
estimate the bank angle as experienced by the wheel based on a gravitational component (421, 422, 461, 462) of the acquired acceleration measurement(s).

2. The computer system of claim 1, wherein the acquired acceleration measurement(s) indicate acceleration in one or more of: a radial dimension (341) of the wheel, a tangential dimension (342) of the wheel, and a lateral dimension (343) of the wheel.

3. The computer system of any of claims 1-2, wherein the processing circuitry is configured to estimate the bank angle as experienced by the wheel by:
extracting an amplitude (423, 424) of the gravitational component of the acquired acceleration measurement(s) by filtering the acquired acceleration measurement(s) subject to an oscillation caused by rotation of the wheel; and
estimating the bank angle as experienced by the wheel based on the extracted amplitude of the gravitational component of the acquired acceleration measurement(s).

4. The computer system of any of claims 1-3, wherein the processing circuitry is configured to estimate the bank angle as experienced by the wheel by:
relating the gravitational component of the acquired acceleration measurement(s) to a reference value for the gravitational component corresponding to a reference bank angle.

5. The computer system of any of claims 1-4, wherein the processing circuitry is configured to:
estimate a respective bank angle for each of two or more wheels of the vehicle, and
estimate bank angle as experienced by the vehicle by combining the respective bank angle estimations.

6. A vehicle (200) comprising the computer system of any of claims 1-5 and one or more wheel mounted sensor(s) configured to provide acceleration measurement(s) to the processing circuitry.

7. A computer-implemented method (100) for estimating bank angle (360) as experienced by a wheel (211, 221, 300) of a vehicle (200), the method comprising:
acquiring (110), by processing circuitry of a computer system, acceleration measurement(s) (411, 412, 451, 452) from a wheel mounted sensor (310) of the wheel; and
estimating (120), by the processing circuitry, the bank angle as experienced by the wheel based on a gravitational component (421, 422, 461, 462) of the acquired acceleration measurement(s).

8. The method of claim 7, wherein the acquired acceleration measurement(s) indicate acceleration in one or more of: a radial dimension (341) of the wheel, a tangential dimension (342) of the wheel, and a lateral dimension (343) of the wheel.

9. The method of any of claims 7-8, wherein estimating the bank angle as experienced by the wheel comprises:
extracting (121), by the processing circuitry, an amplitude (423, 424) of the gravitational component of the acquired acceleration measurement(s) by filtering the acquired acceleration measurement(s) subject to an oscillation caused by rotation of the wheel; and
estimating (122), by the processing circuitry, the bank angle as experienced by the wheel based on the extracted amplitude of the gravitational component of the acquired acceleration measurement(s).

10. The method of any of claims 7-9, wherein estimating the bank angle as experienced by the wheel comprises:
mapping (123), by the processing circuitry, the gravitational component of the acquired acceleration measurement(s) to a corresponding bank angle value.

11. The method of any of claims 7-10, wherein estimating the bank angle as experienced by the wheel comprises:
relating (124), by the processing circuitry, the gravitational component of the acquired acceleration measurement(s) to a reference value for the gravitational component corresponding to a reference bank angle.

12. The method of claim 11, wherein estimating the bank angle as experienced by the wheel comprises:
performing (125), by the processing circuitry, interpolation or extrapolation of two or more reference values for the gravitational component with corresponding reference bank angles to determine a bank angle value corresponding to the gravitational component of the acquired acceleration measurement(s).

13. The method of any of claims 7-12, wherein a respective bank angle is estimated, by the processing circuitry, for each of two or more wheels of the vehicle, the method further comprising:
estimating, by the processing circuitry, bank angle as experienced by the vehicle by combining (130) the respective bank angle estimations.

14. A computer program product (600) comprising program code for performing, when executed by processing circuitry, the method of any of claims 7-13.

15. A non-transitory computer-readable storage medium (600) comprising instructions, which when executed by processing circuitry, cause the processing circuitry to perform the method of any of claims 7-13.

## Amended claims

### Amended claims in accordance with Rule 137(2) EPC.

1. A computer system (500) for estimating road bank angle (360) as experienced by a wheel (211, 221, 300) of a vehicle (200), the computer system comprising processing circuitry configured to:
acquire acceleration measurement(s) (411, 412, 451, 452) from a wheel mounted sensor (310) of the wheel;
extract - from the acquired acceleration measurement(s) - a gravitational component (421, 422, 461, 462) of the acquired acceleration measurement(s); and
estimate the road bank angle as experienced by the wheel based on the extracted gravitational component (421, 422, 461, 462) of the acquired acceleration measurement(s).

2. The computer system of claim 1, wherein the acquired acceleration measurement(s) indicate acceleration in one or more of: a radial dimension (341) of the wheel, a tangential dimension (342) of the wheel, and a lateral dimension (343) of the wheel.

3. The computer system of any of claims 1-2, wherein the processing circuitry is configured to estimate the road bank angle as experienced by the wheel by:
extracting an amplitude (423, 424) of the gravitational component of the acquired acceleration measurement(s) by filtering the acquired acceleration measurement(s) subject to an oscillation caused by rotation of the wheel; and
estimating the road bank angle as experienced by the wheel based on the extracted amplitude of the gravitational component of the acquired acceleration measurement(s).

4. The computer system of any of claims 1-3, wherein the processing circuitry is configured to estimate the road bank angle as experienced by the wheel by:
relating the gravitational component of the acquired acceleration measurement(s) to a reference value for the gravitational component corresponding to a reference road bank angle.

5. The computer system of any of claims 1-4, wherein the processing circuitry is configured to:
estimate a respective road bank angle for each of two or more wheels of the vehicle, and
estimate road bank angle as experienced by the vehicle by combining the respective road bank angle estimations.

6. A vehicle (200) comprising the computer system of any of claims 1-5 and one or more wheel mounted sensor(s) configured to provide acceleration measurement(s) to the processing circuitry.

7. A computer-implemented method (100) for estimating road bank angle (360) as experienced by a wheel (211, 221, 300) of a vehicle (200), the method comprising:
acquiring (110), by processing circuitry of a computer system, acceleration measurement(s) (411, 412, 451, 452) from a wheel mounted sensor (310) of the wheel;
extracting - from the acquired acceleration measurement(s) - a gravitational component (421, 422, 461, 462) of the acquired acceleration measurement(s); and
estimating (120), by the processing circuitry, the road bank angle as experienced by the wheel based on the extracted gravitational component (421, 422, 461, 462) of the acquired acceleration measurement(s).

8. The method of claim 7, wherein the acquired acceleration measurement(s) indicate acceleration in one or more of: a radial dimension (341) of the wheel, a tangential dimension (342) of the wheel, and a lateral dimension (343) of the wheel.

9. The method of any of claims 7-8, wherein estimating the road bank angle as experienced by the wheel comprises:
extracting (121), by the processing circuitry, an amplitude (423, 424) of the gravitational component of the acquired acceleration measurement(s) by filtering the acquired acceleration measurement(s) subject to an oscillation caused by rotation of the wheel; and
estimating (122), by the processing circuitry, the road bank angle as experienced by the wheel based on the extracted amplitude of the gravitational component of the acquired acceleration measurement(s).

10. The method of any of claims 7-9, wherein estimating the road bank angle as experienced by the wheel comprises:
mapping (123), by the processing circuitry, the gravitational component of the acquired acceleration measurement(s) to a corresponding road bank angle value.

11. The method of any of claims 7-10, wherein estimating the road bank angle as experienced by the wheel comprises:
relating (124), by the processing circuitry, the gravitational component of the acquired acceleration measurement(s) to a reference value for the gravitational component corresponding to a reference road bank angle.

12. The method of claim 11, wherein estimating the road bank angle as experienced by the wheel comprises:
performing (125), by the processing circuitry, interpolation or extrapolation of two or more reference values for the gravitational component with corresponding reference road bank angles to determine a road bank angle value corresponding to the gravitational component of the acquired acceleration measurement(s).

13. The method of any of claims 7-12, wherein a respective road bank angle is estimated, by the processing circuitry, for each of two or more wheels of the vehicle, the method further comprising:
estimating, by the processing circuitry, road bank angle as experienced by the vehicle by combining (130) the respective road bank angle estimations.

14. A computer program product (600) comprising program code for performing, when executed by processing circuitry, the method of any of claims 7-13.

15. A non-transitory computer-readable storage medium (600) comprising instructions, which when executed by processing circuitry, cause the processing circuitry to perform the method of any of claims 7-13.
